# EUROPÄISCHE PATENTSCHRIFT

(11) **EP 1 891 607 B1**
(45) Veröffentlichungstag und Bekanntmachung des Hinweises auf die Patenterteilung: **15.10.2008**
(21) Anmeldenummer: 06763284.4
(22) Anmeldetag: 24.05.2006
(51) Int. Cl.: G07C 9/00

(54) **VERFAHREN ZUM ZUGRIFF VON EINER DATENSTATION AUF EIN ELEKTRONISCHES GERÄT**
METHOD FOR ACCESSING A DATA STATION TO AN ELECTRONIC DEVICE
PROCEDE D'ACCES D'UNE STATION DE DONNEES A UN APPAREIL ELECTRONIQUE

(30) Priorität: 02.06.2005 DE 102005025806
(43) Veröffentlichungstag der Anmeldung: 27.02.2008
(73) Patentinhaber: Bundesdruckerei GmbH, 10958 Berlin (DE)
(72) Erfinder: NGUYEN, Kim, 10437 Berlin (DE)
(74) Vertreter: Richardt, Markus Albert
(86) Internationale Anmeldenummer: PCT/EP2006/062619
(87) Internationale Veröffentlichungsnummer: WO 2006/128829

(56) Entgegenhaltungen:
- WO-A-03/005143
- US-A- 6 101 477
- PUBLISHED BY AUTHORITY OF THE SECRETARY GENERAL: "Machine Readable Travel Documents Technical Report PKI for Machine Readable Travel Documents offering ICC Read-Only Access Version 1.1" ONLINE, [Online] 1. Oktober 2004 (2004-10-01), Seiten 1-57, XP002396748 online Gefunden im Internet: URL:http://www.icao.int/mrtd/download/docu ments/TR-PKI%20mrtds%20ICC%20read-only%20a ccess%20v1_1.pdf> [gefunden am 2006-08-29]
- INFINEON TECHNOLOGIES: "Security & Chip Card ICs SLE 55R16" ONLINE, [Online] Januar 2001 (2001-01), Seiten 1-8, XP002396660 online Gefunden im Internet: URL:http://www.infineon.com/upload/Documen t/cmc_upload/documents/029/987/SPI_SLE55R1 6_0101.pdf> [gefunden am 2006-08-29]

## Beschreibung

Die vorliegende Erfindung betrifft ein Verfahren zum Zugriff von einer Datenstation auf ein elektronisches Gerät sowie ein Computerprogrammprodukt, ein digitales Speichermedium, ein elektronisches Gerät, ein Ausweisdokument und eine Datenstation.

Aus dem Stand der Technik sind Verfahren bekannt, Daten unter kryptografischem Schutz elektronisch zu speichern. Eine in den vergangenen zwei Jahrzehnten zu großer Verbreitung gelangte Form geschützter Speicher sind elektronische Chipkarten, die durch ISO 7816 Teil 1 bis 4 normiert sind. Zu den wichtigsten zukünftigen

Anwendungsgebieten der Chipkartentechnologie gehört die Einführung maschinenlesbarer Reisedokumente, von der eine Erhöhung der Sicherheit wie auch der Effizienz der Passagierkontrollen insbesondere in der weltweiten Luftfahrt erhofft wird. Durch die Internationale Luftfahrtbehörde ICAO sind in den letzten Jahren Normen für maschinenlesbare Reisedokumente vorgelegt worden.

Bei der sicheren Speicherung personenbezogener Daten in maschinenlesbaren Reisedokumenten stehen sich das Ziel der Erleichterung von Sicherheitskontrollen durch eine möglichst große Zahl staatlicher und nichtstaatlicher Organisationen und die Schutzwürdigkeit personenbezogener Daten vor unberechtigtem Auslesen gegenüber. Eine angemessene Balance zwischen beiden Anforderungen hat sowohl Unterschieden datenschutzrechtlicher Art als auch unterschiedlicher Schutzwürdigkeit einzelner Datenobjekte Rechnung zu tragen.

Aus der US 2005/0097320A1 ist ein System bekannt, welche eine Kommunikation zwischen einem Anwender und einer Institution, beispielsweise einer Bank, ermöglicht. Die Kommunikation erfolgt über ein Netzwerk. Bei jedem Zugriff des Anwenders auf das System der Institution erfolgt ein "transaction risk assessment", bei dem das Risiko der aktuellen Transaktion ermittelt wird.

Aus der US 2002/0087894 A1 ist ein ähnliches System bekannt, bei dem der Anwender selbst die Sicherheitsstufe für den Datentransfer wählt.

Aus "Machine Readable Travel Documents, Technical Report, PKI for Machine Readable Travel Documents offering ICC Read-Only Access, Version 1.1, 1. Oktober 2004, International Civil Aviation Organization, published by Authority of the Secretary General, Seiten 1 - 57, sind Verfahren für die Basic Access Control bekannt, die sicherstellen sollen, dass ein Zugriff auf den Chip eines Reisedokuments nicht unbemerkt von dem Träger des Ausweisdokuments erfolgen kann. Außerdem dienen diese Verfahren zum Schutz gegen die so genannte "Chip Substitution". Hinsichtlich einer möglichen Extended Access Control ist lediglich offenbart, dass diese entweder auf einem symmetrischen oder einem asymmetrischen Verschlüsselungsverfahren beruhen kann.

Demgegenüber liegt der Erfindung die Aufgabe zugrunde, verbesserte Verfahren zum Zugriff von einer Datenstation auf ein elektronisches Geräts, ein Computerprogrammprodukt, ein digitales Speichermedium, ein elektronisches Gerät, eine Datenstation sowie ein Ausweisdokument zu schaffen.

Die der Erfindung zugrunde liegenden Aufgaben werden mit den Merkmalen der unabhängigen Patentansprüche 1, 11, 14, 15, 24 und 37 gelöst. Bevorzugte Ausführungsformen sind in den abhängigen Ansprüchen angegeben.

Erfindungsgemäß wird ein Verfahren zum Zugriff von einer Datenstation auf eines einer Mehrzahl von in einem elektronischen Gerät gespeicherten Datenobjekten bereitgestellt, wobei das elektronische Gerät eine Zuordnungstabelle aufweist, in der unterschiedlichen Datenobjekten ein kryptografisches Protokoll unterschiedlicher Sicherheitsstufe zugeordnet ist. Die Datenstation übermittelt dem elektronischen Gerät hierbei zunächst eine Anforderung für das eine der Datenobjekte. Das elektronische Gerät bestimmt mit Hilfe der Zuordnungstabelle ein kryptografisches Protokoll ,für das eine der Datenobjekte. Das elektronische Gerät und die Datenstation führen das kryptografische Protokoll durch. Unter der Voraussetzung einer erfolgreichen Durchführung übermittelt das elektronische Gerät das eine der Datenobjekte an die Datenstation.

Die vorliegende Erfindung ist besonders vorteilhaft, da sie es ermöglicht, als unterschiedlich schutzwürdig eingestufte Datenobjekte, die gemeinsam in einem als Datenträger dienenden elektronischen Gerät abgespeichert sind, unterschiedlich stark zu schützen und auf diese Weise miteinander in Konflikt stehenden Anforderungen an die Zugänglichkeit der gespeicherten Datenobjekte flexibel zu entsprechen.

Nach einer Ausführungsform der Erfindung weist das elektronische Gerät eine Softwareanwendung auf, die die Zuordnungstabelle beinhaltet. Die Softwareanwendung bestimmt mit Hilfe der Zuordnungstabelle das kryptografische Protokoll, führt das bestimmte kryptografische Protokoll mit der Datenstation und die Softwareanwendung durch und sendet unter Voraussetzung der erfolgreichen Durchführung das eine der Datenobjekte an die Datenstation. Mithin sind alle Verfahrensschritte auf Seiten des elektronischen Gerätes durch die Softwareanwendung implementiert, was den Vorteil hat, dass das elektronische Gerät mit standardisierter, kostengünstig produzierter Hardware aufgebaut werden und die Stärke des kryptografischen Schutzes der Datenobjekte individuellen Anforderungen leicht angepasst werden kann.

Nach einer Ausführungsform der Erfindung weist das elektronische Gerät ein Betriebssystem auf, das eine unberechtigte Veränderung oder Entfernung der Softwareanwendung verhindert und den Zugriff auf die Datenobjekte nur über die Softwareanwendung zulässt. Durch diese Funktion des Betriebssystems wird gewährleistet, dass der durch die Softwareanwendung implementierte Schutz der Datenobjekte nicht von unberechtigter Seite umgangen oder gebrochen werden kann. Bevorzugterweise lässt das Betriebssystem nach einer Authentisierung als Administrator des elektronischen Geräts jedoch eine Veränderung oder Entfernung der Softwareanwendung zu. Dies ist besonders vorteilhaft, weil zum Beispiel die Zuordnung einzelner Datenobjekte zu kryptografischen Protokollen oder die kryptografischen Protokolle selbst verändert werden können, ohne das elektronische Gerät ersetzen zu müssen. In bevorzugter, jedoch nicht einschränkender Weise betrifft die Erfindung eine das Verfahren implementierende Softwareanwendung für eine Chipkarte, insbesondere ein Java-Applet für eine Chipkarte mit einem Betriebssystem, das eine Virtuelle Java-Maschine einschließt.

Nach einer Ausführungsform der Erfindung ist das elektronische Gerät in ein Ausweisdokument integriert. Ausweisdokumente können beispielsweise Chipkarten im Scheckkartenformat sein, oder aber Dokumente anderer Formate wie Reisepässe oder Visa, in die das elektronische Gerät eingebettet ist. Insbesondere kann es sich bei dem Ausweisdokument um ein maschinenlesbares Reisedokument gemäß den ePassport-Standardisierungen der Internationalen Luftfahrtbehörde ICAO handeln. Die ICAO definiert für maschinenlesbare Reisedokumente unter der Bezeichnung Logische Datenstruktur (LDS) ein mit dem Chipkartenstandard ISO 7816-4 konformes Dateisystem sowie eine interoperable Struktur der in dem Dateisystem gespeicherten Daten.

Nach einer Ausführungsform der Erfindung umfasst mindestens eines der Datenobjekte personenbezogene biometrische Daten. Für den Fall eines maschinenlesbaren Reisedokumentes gemäß den ePassport-Standardisierungen sind durch die LDS die Pfadnamen und Dateiformate personenbezogener, darunter auch biometrischer Daten festgelegt. Insbesondere ist die Speicherung eines Lichtbilds, von Fingerabdrücken sowie Irisdaten des Inhabers des Ausweisdokuments standardisiert. Die Ausführungsform ist besonders vorteilhaft, weil beispielsweise dem Lichtbild eine andere, beispielsweise geringere, Schutzwürdigkeit und damit ein kryptografisches Protokoll geringerer Sicherheitsstufe zugeordnet werden kann als den Fingerabdrücken oder den Irisdaten.

In Abhängigkeit von der Ausführungsform der Erfindung kann das Repertoire der dem elektronischen Gerät und der Datenstation zur Verfügung stehenden kryptografischen Protokolle unterschiedliche Protokolle umfassen und die Zuordnung der einzelnen in dem elektronischen Gerät gespeicherten Datenobjekte zu den einzelnen zur Verfügung stehenden kryptografischen Protokollen unterschiedlich festgelegt sein. Erfindungsgemäß kann hierbei der lesende Zugriff frei möglich sein, an die Durchführung eines kryptografischen Protokolls gebunden sein, an die Durchführung eines von mehreren zur Auswahl gestellten kryptografischen Protokollen gebunden sein oder auch an die verpflichtende Durchführung mehrerer kryptografischer Protokolle gebunden sein. Bevorzugterweise ist in der Zuordnungstabelle mindestens einem der Mehrzahl von Datenobjekten ein freier Zugriff ohne verpflichtendes kryptografisches Protokoll zugeordnet.

Nach einer Ausführungsform der Erfindung ist mindestens einem Datenobjekt ein kryptografisches Protokoll gehobener Sicherheitsstufe zugeordnet, das eine Authentisierung der Datenstation gegenüber dem elektronischen Gerät mittels eines Challenge-Response-Verfahrens erfordert, das auf einem symmetrischen kryptografischen Algorithmus beruht. Hierbei kommt ein gerätspezifischer Schlüssel zum Einsatz, den die Datenstation aus mit dem elektronischen Gerät verbundenen maschinenlesbaren gedruckten Daten ableiten muss. Zur Ableitung des gerätspezifischen Schlüssels kann zusätzlich ein Generalschlüssel erforderlich sein, der elektronischem Gerät und Datenstation bekannt sein muss.

Nach einer Ausführungsform der Erfindung ist mindestens einem Datenobjekt ein kryptografisches Protokoll höherer Sicherheitsstufe zugeordnet, das eine Authentisierung der Datenstation gegenüber dem elektronischen Gerät mittels eines Challenge-Response-Verfahrens erfordert, das auf einem asymmetrischen kryptografischen Algorithmus beruht. Hierbei verfügt die Datenstation über einen öffentlichen Schlüssel und einen privaten Schlüssel. Die Datenstation sendet dem elektronischen Gerät ihren öffentlichen Schlüssel, der bevorzugterweise mit einer digitalen Signatur versehen ist, die durch das elektronische Gerät über eine Zertifikatskette verifiziert werden kann. Nachfolgend beweist die Datenstation dem elektronischen Gerät in einer Challenge-Response-Sequenz, dass sie auch im Besitz des zugehörigen privaten Schlüssels ist. Bevorzugterweise ist die Durchführung des kryptografischen Protokolls höherer Sicherheitsstufe zusätzlich zu dem Protokoll gehobener Sicherheitsstufe erforderlich.

Nach einer Ausführungsform der Erfindung findet die Kommunikation zwischen der Datenstation und dem elektronischen Gerät kontaktlos statt, bevorzugterweise über eine kontaktlose Schnittstelle entsprechend den Normen ISO/IEC 14443 Teil 1 bis 4, wie sie für den Fall von maschinenlesbaren Reisedokumenten durch die ICAO gefordert wird. Um eine nicht autorisierte Beobachtung der kontaktlosen Kommunikation von dritter Seite zu verhindern, ist hierbei bevorzugterweise in der Zuordnungstabelle unterschiedlichen Datenobjekten weiterhin ein Verschlüsselungsprotokoll unterschiedlicher Sicherheitsstufe zugeordnet, gemäß dem die Datenstation und das elektronische Gerät verschlüsselt kommunizieren. Hierbei tauschen Datenstation und elektronisches Gerät bevorzugterweise auf sichere Weise einen Sitzungsschlüssel aus.

Im Weiteren werden bevorzugte Ausführungsformen der Erfindung mit Bezugnahme auf die Zeichnungen näher erläutert. Es zeigen:
- Figur 1: ein Blockdiagramm einer Ausführungsform der erfindungsgemäßen Da- tenstation und des erfindungsgemäßen elektronischen Geräts,
- Figur 2: ein Flussdiagramm des erfindungsgemäßen Verfahrens,
- Figur 3: ein Flussdiagramm der von einer Ausführungsform des erfindungsge- mäßen elektronischen Geräts implementierten Verfahrensschritte, und
- Figur 4: ein Flussdiagramm der von einer Ausführungsform der erfindungsge- mäßen Datenstation implementierten Verfahrensschritte.

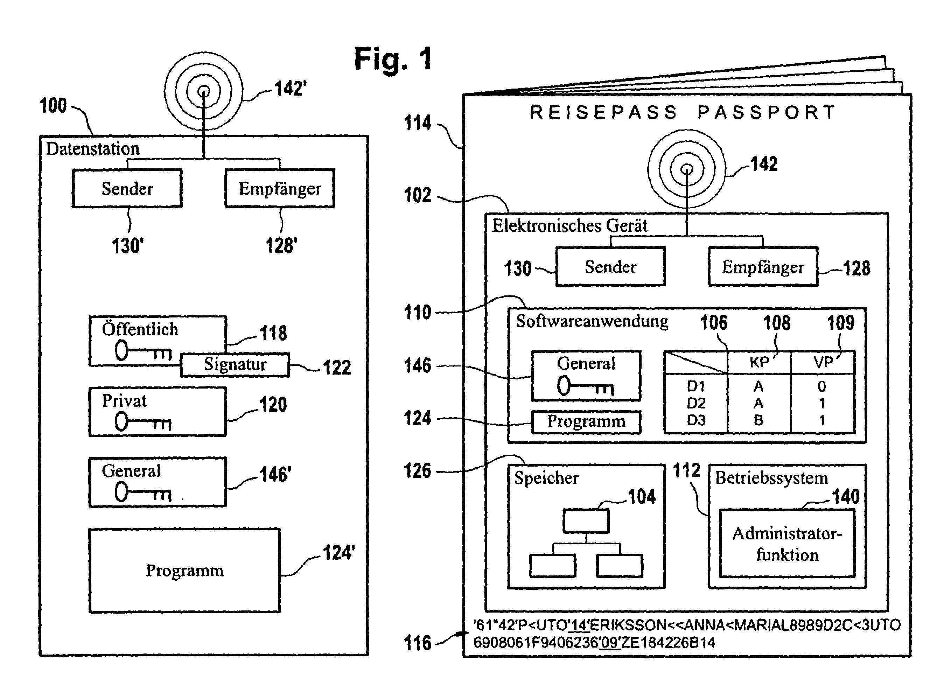

Die Figur 1 zeigt ein Blockdiagramm einer Ausführungsform der Datenstation 100 und des elektronischen Geräts 102, das in ein Ausweisdokument 114 integriert ist. Das Ausweisdokument ist als Reisepass in schematischer, perspektivischer Ansicht dargestellt und weist eine Zone mit maschinenlesbaren gedruckten Daten 116 auf. Die Integration des elektronischen Geräts in das Ausweisdokument kann beispielsweise durch Einbetten in den Einbanddeckel oder die Hauptseite eines Reisepasses erfolgen.

Sowohl das elektronische Gerät 102 als auch die Datenstation 100 können über eine kontaktlose Schnittstelle 142 bzw. 142' verfügen, die jeweils mit einem Sender 130 bzw. 130' und einem Empfänger 128 bzw. 128' verbunden ist und die kontaktlose Kommunikation zwischen Datenstation und elektronischem Gerät ermöglicht. Das elektronische Gerät 102 kann einen Speicher 126 für eine Mehrzahl von Datenobjekten 104 aufweisen. In einem oder mehreren der Datenobjekte 104 können personenbezogene biometrische Daten wie ein Lichtbild, Fingerabdrücke oder Irisdaten des Inhabers des Ausweisdokuments 114 abgelegt sein. Die Speicherung der Datenobjekte 104 im Speicher 126 kann der Standardserie 9303 "Maschinenlesbare Reisedokumente" der Internationalen Luftfahrtbehörde ICAO folgen. Definiert durch die ICAO sind unter der Bezeichnung "Logische Datenstruktur" (LDS) ein mit dem Chipkartenstandard ISO 7816-4 konformes Dateisystem sowie eine interoperable Struktur der in diesem Dateisystem gespeicherten Datenobjekte.

Die Datenstation 100 kann mit computerausführbare Anweisungen 124' programmiert sein, die es ihr erlauben, über die kontaktlosen Schnittstellen 142' und 142 auf die im Speicher 126 des elektronischen Geräts 102 gespeicherten Datenobjekte 104 lesend zuzugreifen. Zum Schutz insbesondere der personenbezogenen biometrischen Daten vor unberechtigtem Auslesen verfügt das elektronische Gerät 102 über Programmanweisungen 124, die den lesenden Zugriff auf Datenobjekte 104 an die erfolgreiche Durchführung eines kryptografischen Protokolls mit der Datenstation 100 binden können. Eine solche Maßnahme wird durch die ICAO empfohlen, die eine Unterstützung einer Vielzahl an Datenschutzoptionen als verpflichtende Anforderung an die standardisierte LDS nennt.

In verschiedenen Datenobjekten 104 können verschiedene Arten personenbezogener biometrischer Daten abgelegt sein, die unterschiedlich schutzwürdig sind. Zum Beispiel kann einem Lichtbild nur geringe Sensitivität zugemessen werden, Fingerabdrücken oder Irisdaten dagegen eine höhergradige Schutzwürdigkeit. Die unterschiedliche Bewertung der Schutzwürdigkeit unterschiedlicher Datenobjekte 104 wird durch die Zuordnungstabelle 106 des elektronischen Geräts 102 kodiert. In der Zuordnungstabelle ist jeweils einem Datenobjekt 104 ein kryptografisches Protokoll 108 unterschiedlicher Sicherheitsstufe zugeordnet. Die Zuordnungstabelle kann einem oder mehreren der Datenobjekte 104 einen freien Zugang ohne bindende Durchführung eines kryptografischen Protokolls zuordnen.

Im Betrieb empfängt das elektronische Gerät 102 von der Datenstation 100 über den Empfänger 128 und die kontaktlose Schnittstelle 142 eine Anforderung für eines der Datenobjekte 104. Das elektronische Gerät bestimmt sodann anhand der Zuordnungstabelle 106 ein kryptografisches Protokoll 108, dessen erfolgreiche Durchführung als Bedingung für den lesenden Zugriff der Datenstation auf das eine der Datenobjekte festgesetzt ist. Das elektronische Gerät und die Datenstation führen das kryptografische Protokoll durch, und das elektronische Gerät übermittelt im Falle des Erfolgs das eine der Datenobjekte an die Datenstation.

Das elektronische Gerät 102 kann eine Softwareanwendung 110 aufweisen, die die Zuordnungstabelle 106 beinhaltet. Hierbei wird das kryptografische Protokoll 108 durch die Softwareanwendung bestimmt, das kryptografische Protokoll wird durch die Datenstation und die Softwareanwendung durchgeführt, und das eine der Datenobjekte wird durch die Softwareanwendung übermittelt. Das elektronische Gerät kann ein Betriebssystem 112 aufweisen, das im Zusammenwirken mit der Hardware des elektronischen Geräts eine unberechtigte Veränderung oder Entfernung der Softwareanwendung verhindert und den Zugriff auf die Datenobjekte 104 nur über die Softwareanwendung zulässt. Auf diese Weise ist es möglich, das elektronische Gerät 102 auf der Basis massenproduzierter, standardisierter Hardware zu implementieren, während gleichzeitig die Spezifikationen der verwendeten kryptografischen Protokolle und die in der Zuordnungstabelle 126 kodierte Zuordnung von Datenobjekten 104 zu kryptografischen Protokollen unterschiedlichen Anforderungen angepasst werden kann. Das elektronische Gerät kann eine Java Card mit einer Virtuellen Java-Maschine sein, auf der die Softwareanwendung 110 in Form eines Java-Applets installiert ist.

Das Betriebssystem 112 kann die Softwareanwendung 110 einschließlich der Zuordnungstabelle 126 vor unberechtigter Veränderung und Entfernung schützen, gleichzeitig aber über eine Administratorfunktion 140 verfügen, die nach einer Authentisierung als Administrator des elektronischen Geräts 102 eine Veränderung oder Entfernung der Softwareanwendung zulässt. Die Administratorfunktion ist besonders vorteilhaft, weil das elektronische Gerät veränderten Anforderungen angepasst werden kann, anstatt es durch ein neues elektronisches Gerät zu ersetzen. Veränderte Anforderungen können beispielsweise verbesserte kryptografische Protokolle 108 oder eine geänderte Einstufung der Schutzwürdigkeit unterschiedlicher Datenobjekte 104 betreffen.

In der Zuordnungstabelle 106 können unterschiedlichen Datenobjekten weiterhin unterschiedliche Verschlüsselungsprotokolle 109 zugeordnet sein, nach denen das elektronische Gerät 102 und die Datenstation 100 ihre Kommunikation verschlüsseln können. Eine Verschlüsselung ist besonders vorteilhaft, da sie es erlaubt, eine Beobachtung der kontaktlosen Kommunikation zwischen elektronischem Gerät und Datenstation durch Dritte zu verhindern.

Das elektronische Gerät 102 und die Datenstation 100 können über geeignete kryptografische Schlüssel 118, 120 und 146 verfügen, die bei der Durchführung unterschiedlicher kryptografischer Protokolle eingesetzt werden.

Die Datenstation 100 kann einen weiteren gerätespezifischen Schlüssel des elektronischen Geräts 102 aus den maschinenlesbaren gedruckten Daten 116 ableiten. Hierzu kann die Datenstation einen optischen Sensor aufweisen, um die gedruckten Daten 116 optisch zu lesen. Aus den so erfassten Daten wird dann z.B. ein symmetrischer Schlüssel zur Kommunikation mit dem elektronischen Gerät 102 gewonnen. In einer Ausführungsform werden die Daten 116 als symmetrischer Schlüssel verwendet. Dieser symmetrische Schlüssel kann in ungeschützter oder geschützter Form in dem elektronischen Gerät 102 gespeichert werden. Alternativ ist das elektronische Gerät 102 so ausgebildet, dass es im Bedarfsfall aus den auch elektronisch in dem elektronischen Gerät 102 gespeicherten Daten 116 diesen symmetrischen Schlüssel generiert.

Zusätzlich kann ein Generalschlüssel 146 bzw. 146' eingesetzt werden, der sowohl dem elektronischen Gerät als auch der Datenstation 100 bekannt ist. Weiterhin kann die Datenstation über ein asymmetrisches Schlüsselpaar aus öffentlichem 118 und privatem 120 Schlüssel verfügen, wobei sie dem elektronischen Gerät im Rahmen eines kryptografischen Protokolls ihren öffentlichen Schlüssel übermittelt. Der öffentliche Schlüssel kann mit einer digitalen Signatur 122 versehen sein, die es erlaubt, über eine Zertifikatskette die Authentizität des Schlüssels 118 zu verifizieren.

Der Generalschlüssel 146' kann beispielsweise von der Datenstation 100 verwendet werden, um aus den optisch erfassten Daten 116 den weiteren symmetrischen Schlüssel zu generieren. Beispielsweise werden hierzu der Generalschlüssel 146' und die Daten 116 aneinandergehängt.

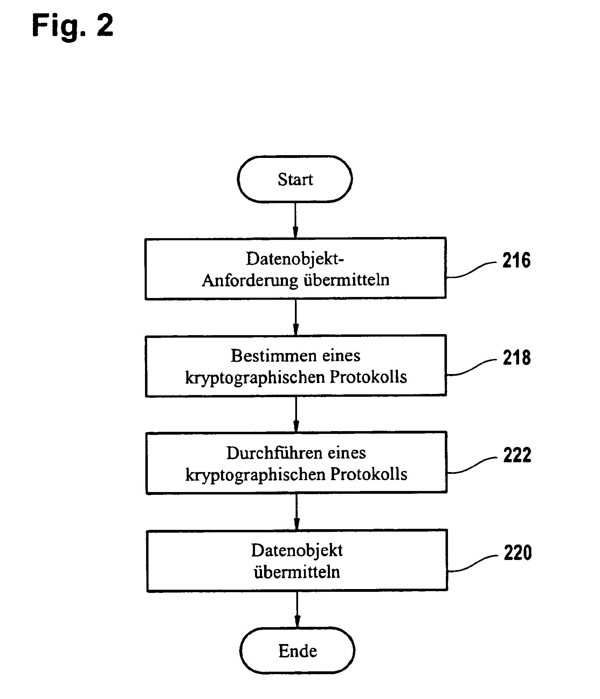

Figur 2 stellt in einem Flussdiagramm das erfindungsgemäße Verfahren zum Zugriff von der Datenstation auf eines der in dem elektronischen Gerät gespeicherten Datenobjekte dar. In Schritt 216 übermittelt die Datenstation eine Anforderung für das eine der Datenobjekte an das elektronische Gerät. In Schritt 218 bestimmt das elektronische Gerät mit Hilfe seiner Zuordnungstabelle ein kryptografisches Protokoll. In Schritt 222 führen das elektronische Gerät und die Datenstation das kryptografische Protokoll durch. In Schritt 220 übermittelt das elektronische Gerät das eine der Datenobjekte an die Datenstation.

Hierbei kann die in der Zuordnungstabelle des elektronischen Geräts kodierte Information, welches kryptografische Protokoll dem einen der Datenobjekte zugeordnet ist, der Datenstation bereits vor dem Senden 216 der Anforderung bekannt sein. Beispielsweise kann die im elektronischen Gerät vorhandene Zuordnungstabelle einen durch einen Standard festgelegten Inhalt besitzen, von dem auch die Datenstation über eine Kopie verfügt. Alternativ kann das elektronische Gerät eine Spezifikation des kryptografischen Protokolls vor dessen Durchführung 222 an die Datenstation übermitteln, wobei die Spezifikation einem aus einem Repertoire mehrerer kryptografischer Protokolle entsprechen muss, die die Datenstation in der Lage ist durchzuführen. Als weitere Alternative kann das elektronische Gerät die Spezifikation mehrerer kryptografischer Protokolle an die Datenstation übermitteln, unter denen die Datenstation ein beliebiges Protokoll auswählen kann, dass sie in der Lage ist durchzuführen.

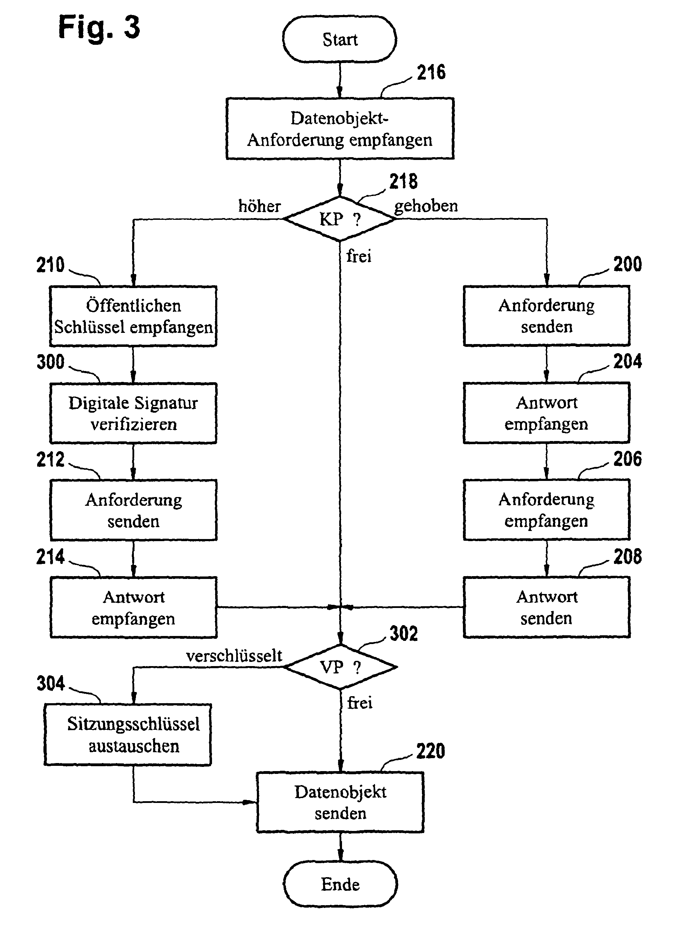

Figur 3 zeigt ein Flussdiagramm der von einer bevorzugten Ausführungsform des erfindungsgemäßen elektronischen Geräts implementierten Verfahrensschritte. Nachdem das elektronische Gerät in Schritt 216 von der Datenstation die Anforderung eines Datenobjekts empfangen hat, bestimmt es in Schritt 218 mit Hilfe der Zuordnungstabelle ein kryptografisches Protokoll (KP), an dessen verpflichtende Durchführung der lesende Zugriff durch die Datenstation gebunden sein soll. Beispielhaft dargestellt sind als drei mögliche Zuordnungen die Bindung an ein kryptografisches Protokoll gehobener Sicherheitsstufe beginnend mit Schritt 200, die Bindung an ein kryptografisches Protokoll höherer Sicherheitsstufe beginnend mit Schritt 210, und ein freier Zugriff ohne Bindung an ein kryptografisches Protokoll.

Für den Fall einer Bestimmung des kryptografischen Protokolls gehobener Sicherheitsstufe für das Datenobjekt muss sich die Datenstation gegenüber dem elektronischen Gerät in einem auf einem symmetrischen kryptografischen Algorithmus wie dem 3DES- oder AES-Verschlüsselungsalgorithmus beruhenden Challenge-Response-Verfahren authentisieren. Dazu sendet in Schritt 200 das elektronische Gerät eine Anforderung (das Challenge) an die Datenstation, die die Anforderung korrekt beantworten und die Antwort (das Response) an das elektronische Gerät zurücksenden muss. In Schritt 204 empfängt das elektronische Gerät die Antwort der Datenstation und überzeugt sich von ihrer Richtigkeit. Das elektronische Gerät kann in Schritt 206 in umgekehrter Weise eine Anforderung der Datenstation empfangen, die es in Schritt 208 beantwortet, um sich gegenüber der Datenstation zu authentisieren. Diese jeweils einseitige Authentisierung kann auch in Form einer gegenseitigen Authentisierung in einem Schritt erfolgen.

Für den Fall einer Bestimmung des kryptografischen Protokolls höherer Sicherheitsstufe für das Datenobjekt muss sich die Datenstation gegenüber dem elektronischen Gerät in einem auf einem asymmetrischen kryptografischen Algorithmus wie dem RSA- oder Elliptische-Kurven-Kryptosystem beruhenden Challenge-Response-Verfahren authentisieren. Dazu empfängt das elektronische Gerät in Schritt 210 den öffentlichen Schlüssel der Datenstation. Dieser kann mit einer digitalen Signatur versehen sein, die das elektronische Gerät in Schritt 300 verifiziert. Die Verifikation kann dabei auf einer Zertifikatskette basieren, an deren Ende eine oberste Zertifizierungsinstanz stehen muss, deren öffentlicher Schlüssel im elektronischen Gerät vorhanden ist. Im Falle einer Integration des elektronischen Geräts in ein Ausweisdokument kann es sich bei der obersten Zertifizierungsinstanz um die ausstellende nationale Behörde oder eine internationale Organisation handeln. In Schritt 212 sendet das elektronische Gerät eine Anforderung an die Datenstation, die auf dem empfangenen öffentlichen Schlüssel beruht, und durch deren Beantwortung die Datenstation beweisen muss, dass sie auch im Besitz des zugehörigen privaten Schlüssels ist. In Schritt 214 empfängt das elektronische Gerät die Antwort der Datenstation und überzeugt sich von ihrer Richtigkeit.

Das elektronische Gerät kann in Schritt 302 mit Hilfe der Zuordnungstabelle ein Verschlüsselungsprotokoll bestimmen, gemäß dem die Datenstation und das elektronische Gerät verschlüsselt kommunizieren. Beispielhaft dargestellt sind als mögliche Zuordnungen die Verschlüsselung der Kommunikation mit einem Sitzungsschlüssel, der in Schritt 304 ausgetauscht wird, und eine freie, unverschlüsselte Kommunikation, bei der Schritt 304 umgangen wird. Dabei kommt in Schritt 304 der Diffie-Hellman-Schlüsselaustausch oder ein ähnliches Verfahren zum Einsatz, das dem elektronischen Gerät und der Datenstation erlaubt, auf sichere Weise einen Sitzungsschlüssel hoher Stärke abzuleiten.

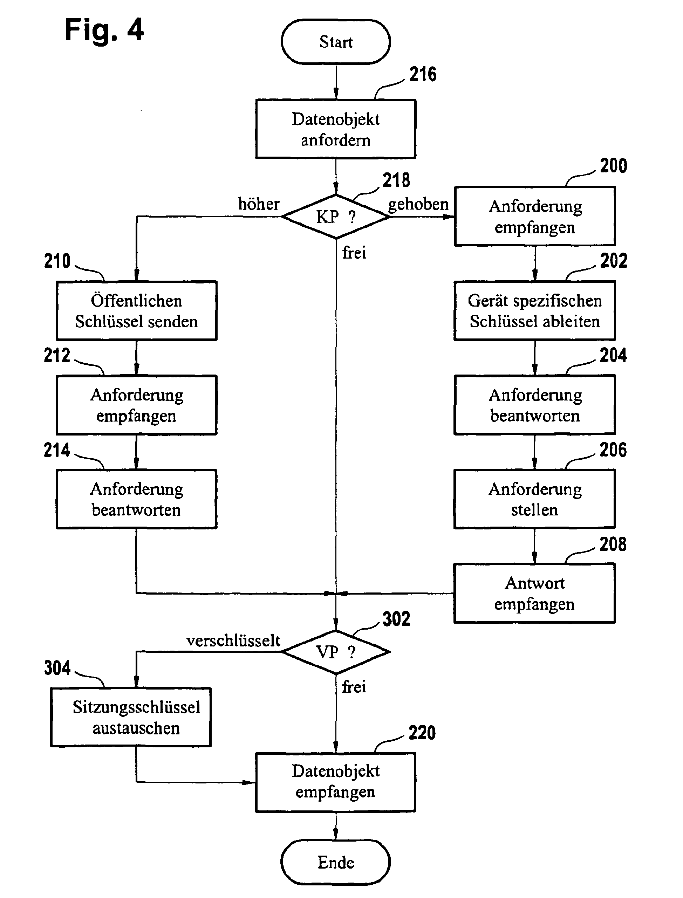

Figur 4 zeigt ein Flussdiagramm der von einer bevorzugten Ausführungsform der erfindungsgemäßen Datenstation implementierten Verfahrensschritte. Nachdem die Datenstation in Schritt 216 ein Datenobjekt von dem elektronischen Gerät angefordert hat, folgt sie an der Verzweigung 218 dem kryptografischen Protokoll, an dessen verpflichtende Durchführung das elektronische Gerät den lesenden Zugriff auf das Datenobjekt bindet. Analog zu Figur 3 sind beispielhaft als drei mögliche Zuordnungen die Bindung an ein kryptografisches Protokoll gehobener Sicherheitsstufe beginnend mit Schritt 200, die Bindung an ein kryptografisches Protokoll höherer Sicherheitsstufe beginnend mit Schritt 210, und ein freier Zugriff ohne Bindung an ein kryptografisches Protokoll dargestellt.

Für den Fall einer Bestimmung des kryptografischen Protokolls gehobener Sicherheitsstufe für das Datenobjekt muss sich die Datenstation gegenüber dem elektronischen Gerät in einem auf einem symmetrischen kryptografischen Algorithmus wie dem 3DES- oder AES-Verschlüsselungsalgorithmus beruhenden Challenge-Response-Verfahren authentisieren. In Schritt 200 empfängt die Datenstation eine Anforderung von dem elektronischen Gerät. Bei dem symmetrischen kryptografischen Algorithmus kann der gerätspezifische Schlüssel zum Einsatz kommen, den die Datenstation zur Beantwortung der Anforderung in Schritt 202 aus den maschinenlesbaren gedruckten Daten des elektronischen Geräts ableiten muss. Dadurch beweist die Datenstation, dass ihr beispielsweise ein Reisepass, in den das elektronische Gerät integriert ist, sichtbar präsentiert wurde. Zusätzlich kann ein Generalschlüssel nötig sein, um den gerätspezifischen Schlüssel aus den maschinenlesbaren gedruckten Daten abzuleiten. In Schritt 204 sendet die Datenstation die Antwort an das elektronische Gerät. In Schritt 206 kann in umgekehrter Weise eine die Datenstation eine Anforderung an das elektronische Gerät senden und die Antwort in Schritt 208 empfangen.

Für den Fall einer Bestimmung des kryptografischen Protokolls höherer Sicherheitsstufe für das Datenobjekt muss sich die Datenstation gegenüber dem elektronischen Gerät in einem auf einem asymmetrischen kryptografischen Algorithmus wie dem RSA- oder Elliptische-Kurven-Kryptosystem beruhenden Challenge-Response-Verfahren authentisieren. Dazu sendet die Datenstation in Schritt 210 ihren öffentlichen Schlüssel an das elektronische Gerät. In Schritt 212 empfängt die Datenstation eine Anforderung von dem elektronischen Gerät, die auf dem gesendeten öffentlichen Schlüssel beruht, und durch deren Beantwortung in Schritt 214 die Datenstation beweist, dass sie auch im Besitz des zugehörigen privaten Schlüssels ist.

Beispielsweise generiert das elektronische Gerät eine Zufallszahl. Diese wird mit dem öffentlichen Schlüssel der Datenstation verschlüsselt und das daraus resultierende Chiffrat wird von dem elektronischen Gerät an die Datenstation übertragen. Die Datenstation entschlüsselt das Chiffrat mit deren geheimen Schlüssel und sendet das Ergebnis der Entschlüsselung zurück an das elektronische Gerät. Das elektronische Gerät vergleicht dann die ursprünglich generierte Zufallszahl mit dem von der Datenstation empfangenen Ergebnis der Entschlüsselung. Wenn beides übereinstimmt, wird die Datenstation als authentisch und berechtigt eingestuft.

Das elektronische Gerät kann die Übermittlung des Datenobjekts an die verpflichtende Durchführung der Schritte des kryptografischen Protokolls höherer Sicherheitsstufe zusätzlich zu den Schritten des Protokolls gehobener Sicherheitsstufe binden.

Das elektronische Gerät in kann in Schritt 302 mit Hilfe der Zuordnungstabelle ein Verschlüsselungsprotokoll bestimmen, gemäß dem die Datenstation und das elektronische Gerät verschlüsselt kommunizieren. Beispielhaft dargestellt sind als mögliche Zuordnungen die Verschlüsselung der Kommunikation mit einem Sitzungsschlüssel, der in Schritt 304 ausgetauscht wird, und eine freie, unverschlüsselte Kommunikation, bei der Schritt 304 umgangen wird.

### Bezugszeichenliste

- 100: Datenstation
- 102: Elektronisches Gerät
- 104: Datenobjekte
- 106: Zuordnungstabelle
- 108: Kryptografisches Protokoll
- 109: Verschlüsselungsprotokoll
- 110: Softwareanwendung
- 112: Betriebssystem
- 114: Ausweisdokument
- 116: Maschinenlesbare gedruckte Daten
- 118: Öffentlicher Schlüssel
- 120: Privater Schlüssel
- 122: Digitale Signatur
- 124, 124': Computerausführbare Anweisungen
- 126: Speicher
- 128, 128': Empfänger
- 130, 130': Sender
- 140: Administratorfunktion
- 142, 142': Kontaktlose Schnittstelle
- 146, 146': Generalschlüssel

## Patentansprüche

1. Verfahren zum Zugriff von einer Datenstation (100) auf eines einer Mehrzahl von in einem elektronischen Gerät (102) gespeicherten Datenobjekten (104), wobei das elektronische Gerät eine Zuordnungstabelle (106) aufweist, in der unterschiedlichen Datenobjekten kryptografische Protokolle (108) unterschiedlicher Sicherheitsstufen zugeordnet sind, wobei jedes der kryptographischen Protokolle zur Authentisierung der Datenstation (100) dient, und wobei die Durchführung des einem der Datenobjekte in der Zuordnungstabelle zugeordneten kryptographischen Protokolls Bedingung für den Zugriff der Datenstation auf dieses Datenobjekt ist, mit folgenden Schritten:
• Übermitteln (216) einer Anforderung für das eine der Datenobjekte an das elektronische Gerät durch die Datenstation (100),
• Bestimmen (218) eines kryptografischen Protokolls für das eine der Datenobjekte mit Hilfe der Zuordnungstabelle durch das elektronische Gerät,
• Durchführen (222) des kryptografischen Protokolls durch das elektronische Gerät und die Datenstation (100), und
• Übermitteln (220) des einen der Datenobjekte durch das elektronische Gerät,
wobei das elektronische Gerät (102) in ein Ausweisdokument (114) integriert ist.

2. Verfahren nach Anspruch 1, wobei das Ausweisdokument maschinenlesbare gedruckte Daten (116) aufweist, wobei in der Zuordnungstabelle (106) mindestens einem ersten der Mehrzahl von Datenobjekten (104) ein kryptografisches Protokoll (108) gehobener Sicherheitsstufe zugeordnet ist, wobei das kryptografische Protokoll gehobener Sicherheitsstufe die folgenden Schritte umfasst:
• Stellen (200) einer Anforderung an die Datenstation (100) basierend auf einem symmetrischen kryptografischen Algorithmus, wobei ein gerätespezifischer Schlüssel (144) verwendet wird, der aus den maschinenlesbaren gedruckten Daten ableitbar ist, durch das elektronische Gerät,
• Ableitung (202) des gerätespezifischen Schlüssels aus den maschinenlesbaren gedruckten Daten durch die Datenstation,
• Beantworten (204) der Anforderung, um sich gegenüber dem elektronischen Gerät zu authentisieren, durch die Datenstation,
und wobei die Datenstation (100) einen öffentlichen Schlüssel (118) und einen privaten Schlüssel (120) aufweist, wobei in der Zuordnungstabelle (106) mindestens einem zweiten der Mehrzahl von Datenobjekten ein kryptografisches Protokoll (108) höherer Sicherheitsstufe zugeordnet ist, wobei das kryptografische Protokoll höherer Sicherheitsstufe die folgenden Schritte umfasst:
• Übermitteln (210) des öffentlichen Schlüssels an das elektronische Gerät (102) durch die Datenstation,
• Stellen (212) einer Anforderung an die Datenstation durch das elektronische Gerät unter Verwendung des öffentlichen Schlüssels, zu deren Beantwortung der private Schlüssel notwendig ist, durch das elektronische Gerät,
• Beantworten (214) der Anforderung zur Authentisierung gegenüber dem elektronischen Gerät durch die Datenstation,
wobei zumindest die ersten und zweiten Datenobjekte personenbezogene biometrische Daten umfassen, wobei in der Zuordnungstabelle mindestens einem der Mehrzahl von Datenobjekten (104) ein freier Zugriff ohne kryptografisches Protokoll (108) zugeordnet ist,
wobei das kryptografischen Protokolls gehobener Sicherheitsstufe durch das elektronische Gerät (102) und die Datenstation (100) durchgeführt wird (222), wenn es sich bei dem einen der Datenobjekte um das erste Datenobjekt handelt, und wobei das kryptografische Protokolls höherer Sicherheitsstufe durch das elektronische Gerät und die Datenstation durchgeführt wird, wenn es sich beim einen der Datenobjekte um das zweite Datenobjekt handelt.

3. Verfahren nach Anspruch 1 oder 2, wobei das elektronische Gerät (102) eine Softwareanwendung (110) aufweist, wobei die Softwareanwendung die Zuordnungstabelle (106) beinhaltet, wobei das kryptografische Protokoll (108) durch die Softwareanwendung bestimmt wird, wobei das kryptografische Protokoll durch die Datenstation und die Softwareanwendung durchgeführt wird, und das eine der Datenobjekte durch die Softwareanwendung übermittelt wird.

4. Verfahren nach Anspruch 3, wobei das elektronische Gerät (102) ein Betriebssystem (112) aufweist, das eine unberechtigte Veränderung oder Entfernung der Softwareanwendung verhindert (110) und den Zugriff auf die Datenobjekte (104) nur über die Softwareanwendung zulässt.

5. Verfahren nach Anspruch 4, wobei das Betriebssystem (112) nach einer Authentisierung als Administrator des elektronischen Geräts (102) eine Veränderung oder Entfernung der Softwareanwendung zulässt.

6. Verfahren einem der vorhergehenden Ansprüche, wobei die Datenstation (100) und das elektronische Gerät (102) kontaktlos kommunizieren.

7. Verfahren nach Anspruch 6, wobei in der Zuordnungstabelle (106) unterschiedlichen Datenobjekten (104) weiterhin ein Verschlüsselungsprotokoll (109) unterschiedlicher Sicherheitsstufe zugeordnet ist, gemäß dem die Datenstation und das elektronische Gerät verschlüsselt kommunizieren.

8. Verfahren nach einem der vorhergehenden Ansprüche, wobei zur Ableitung des gerätspezifischen Schlüssels (144) aus den maschinenlesbaren gedruckten Daten (116) ein Generalschlüssel (146) notwendig ist, der dem elektronischen Gerät (102) und der Datenstation (100) bekannt ist.

9. Verfahren nach einem der vorhergehenden Ansprüche, wobei das kryptografische Protokoll gehobener Sicherheitsstufe (108) weiterhin die folgenden Schritte umfasst:
• Stellen (206) einer Anforderung an das elektronische Gerät (102) basierend auf einem symmetrischen kryptografischen Algorithmus, wobei der gerätspezifische Schlüssel verwendet wird, durch die Datenstation (100),
• Beantworten (208) der Anforderung, um sich gegenüber der Datenstation zu authentisieren, durch das elektronische Gerät.

10. Verfahren nach einem der vorhergehenden Ansprüche, wobei der öffentlichen Schlüssel (118) durch eine digitale Signatur (122) **gekennzeichnet** ist, und das elektronische Gerät die digitale Signatur verifiziert (300).

11. Computerprogrammprodukt mit einer Zuordnungstabelle (106), in der unterschiedlichen Datenobjekten (104) jeweils ein kryptografisches Protokoll (108) unterschiedlicher Sicherheitsstufe zugeordnet ist, wobei jedes der kryptographischen Protokolle zur Authentisierung einer Datenstation dient, und wobei die Durchführung des einem der Datenobjekte in der Zuordnungstabelle zugeordneten kryptographischen Protokolls Bedingung für den Zugriff der Datenstation auf dieses Datenobjekt ist, und computerausführbaren Anweisungen (124) zum
• Empfangen einer Anforderung für eines einer Mehrzahl von Datenobjekten (104) von einer Datenstation (100),
• Bestimmen eines kryptografischen Protokolls für das eine der Datenobjekte mit Hilfe der Zuordnungstabelle,
• Durchführen des kryptografischen Protokolls mit der Datenstation,
• Senden des einen der Datenobjekte an die Datenstation.

12. Computerprogrammprodukt nach Anspruch 11, wobei die Zuordnungstabelle (106) und die computerausführbaren Anweisungen (124) in einem elektronischen Gerät mit einem Betriebssystem so installiert sind, dass das Betriebssystem eine unberechtigte Veränderung oder Entfernung der Zuordnungstabelle oder der computerausführbaren Anweisungen verhindert.

13. Computerprogrammprodukt nach Anspruch 12, wobei der Zugriff auf die Datenobjekte (104) nur über die computerausführbaren Anweisungen möglich ist.

14. Digitales Speichermedium beinhaltend ein Computerprogrammprodukt nach einem der Ansprüche 11, 12 oder 13.

15. Elektronisches Gerät (102) mit
• einem Speicher (126) für eine Mehrzahl von Datenobjekten (104),
• einem Empfänger (128) zum Empfangen einer Anforderung für eines der Datenobjekte von einer Datenstation (100),
• einer Zuordnungstabelle (106), in der unterschiedlichen Datenobjekten jeweils ein kryptografisches Protokoll (108) unterschiedlicher Sicherheitsstufe zugeordnet ist, wobei jedes der kryptographischen Protokolle zur Authentisierung der Datenstation dient, und wobei die Durchführung des einem der Datenobjekte in der Zuordnungstabelle zugeordneten kryptographischen Protokolls Bedingung für den Zugriff der Datenstation auf dieses Datenobjekt ist,
• Programmanweisungen (124) zum Bestimmen eines kryptografischen Protokolls für das eine der Datenobjekte mit Hilfe der Zuordnungstabelle,
• Programmanweisungen (124) zum Durchführen des kryptografischen Protokolls mit der Datenstation,
• einem Sender (130) zum Senden des einen der Datenobjekte an die Datenstation.

16. Elektronisches Gerät (102) nach Anspruch 15, das eine Softwareanwendung (110) aufweist, die die Programmanweisungen (124) beinhaltet, wobei die Softwareanwendung die Zuordnungstabelle (106) beinhaltet, wobei das kryptografische Protokoll (108) durch die Softwareanwendung ausgewählt wird, wobei das kryptografische Protokoll durch die Datenstation (100) und die Softwareanwendung durchgeführt wird, und das eine der Datenobjekte (104) durch die Softwareanwendung übermiltelt wird.

17. Elektronisches Gerät (102) nach Anspruch 16, das ein Betriebssystem (112) aufweist, wobei das Betriebssystem zur Verhinderung einer unberechtigten Veränderung oder Entfernung der Softwareanwendung (110) und zur Verhinderung eines Zugriffs auf die Datenobjekte (104) unter Umgehung der Softwareanwendung ausgebildet ist.

18. Elektronisches Gerät (102) nach Anspruch 17, wobei das Betriebssystem (112) eine Administratorfunktion (140) zur Authentisierung als Administrator aufweist, wobei nach einer Authentisierung als Administrator des elektronischen Geräts eine Veränderung oder Entfernung der Softwareanwendung (110) möglich ist.

19. Elektronisches Gerät (102) nach einem der Ansprüche 15 bis 18, wobei das elektronische Gerät in ein Ausweisdokument (114) integriert ist.

20. Elektronisches Gerät (102) nach einem der Ansprüche 15 bis 19, wobei mindestens eines der Datenobjekte (104) personenbezogene biometrische Daten umfasst.

21. Elektronisches Gerät (102) nach einem der Ansprüche 15 bis 20, das eine Schnittstelle (142) zur kontaktlosen Kommunikation mit der Datenstation (100) aufweist.

22. Elektronisches Gerät (102) nach Anspruch 21, wobei in der Zuordnungstabelle (106) unterschiedlichen Datenobjekten weiterhin ein Verschlüsselungsprotokoll (109) unterschiedlicher Sicherheitsstufe zugeordnet ist, gemäß dem die Datenstation (100) und das elektronische Gerät verschlüsselt kommunizieren.

23. Elektronisches Gerät (102) nach einem der Ansprüche 15 bis 22, wobei in der Zuordnungstabelle (106) mindestens einem der Mehrzahl von Datenobjekten (104) ein freier Zugriff ohne kryptografisches Protokoll (108) zugeordnet ist.

24. Elektronisches Gerät (102) nach Anspruch 23, wobei das elektronische Gerät maschinenlesbare gedruckte Daten (116) aufweist, wobei in der Zuordnungstabelle (106) mindestens einem der Mehrzahl von Datenobjekten ein kryptografisches Protokoll (108) gehobener Sicherheitsstufe zugeordnet ist, das die folgenden Schritte umfasst:
• Stellen (200) einer Anforderung an die Datenstation (100) basierend auf einem symmetrischen kryptografischen Algorithmus, wobei ein gerätspezifischer Schlüssel (144) verwendet wird, der aus den maschinenlesbaren gedruckten Daten ableitbar ist, durch das elektronische Gerät,
• Ableitung (202) des gerätspezifischen Schlüssels aus den maschinenlesbaren gedruckten Daten durch die Datenstation,
• Beantworten (204) der Anforderung, um sich gegenüber dem elektronischen Gerät zu authentisieren, durch die Datenstation.

25. Elektronisches Gerät (102) nach Anspruch 24, wobei zur Ableitung des gerätspezifischen Schlüssels aus den maschinenlesbaren gedruckten Daten (116) ein Generalschlüssel (146) notwendig ist, der elektronischem Gerät und Datenstation (100) bekannt ist.

26. Elektronisches Gerät (102) nach Anspruch 24 oder 25, wobei das kryptografische Protokoll (108) gehobener Sicherheitsstufe weiterhin die folgenden Schritte umfasst:
• Stellen (206) einer Anforderung an das elektronische Gerät basierend auf einem symmetrischen kryptografischen Algorithmus, wobei der gerätspezifische Schlüssel (144) verwendet wird, durch die Datenstation (100),
• Beantworten (208) der Anforderung, um sich gegenüber der Datenstation (100) zu authentisieren, durch das elektronische Gerät.

27. Elektronisches Gerät (102) nach einem der Ansprüche 23 bis 26, wobei die Datenstation (100) einen öffentlichen Schlüssel (118) und einen privaten Schlüssel (118) aufweist, wobei in der Zuordnungstabelle (106) mindestens einem der Mehrzahl von Datenobjekten (104) ein kryptografisches Protokoll (108) höherer Sicherheitsstufe zugeordnet ist, das die folgenden Schritte umfasst:
• Übermitteln (210) des öffentlichen Schlüssels an das elektronische Gerät durch die Datenstation,
• Stellen (212) einer Anforderung an die Datenstation durch das elektronische Gerät unter Verwendung des öffentlichen Schlüssels, zu deren Beantwortung der private Schlüssel notwendig ist, durch das elektronische Gerät,
• Beantworten (214) der Anforderung zur Authentisierung gegenüber dem elektronischen Gerät durch die Datenstation.

28. Elektronisches Gerät (102) nach Anspruch 27, wobei der öffentliche Schlüssel (118) durch eine digitale Signatur (122) **gekennzeichnet** ist, und das elektronische Gerät (102) die digitale Signatur verifiziert.

29. Datenstation (100) zum Lesen eines Datenobjekts (104) aus einem Speicher (126) eines in ein Ausweisdokument (114) integrierten elektronischen Geräts (102) mit
• einem Sender (130') zur Übermittlung einer Anforderung für ein Datenobjekt (104) an ein elektronisches Gerät, in dem eine Mehrzahl von Datenobjekten (104) gespeichert ist,
• einem Empfänger (128') zum Empfang einer Bestimmung eines kryptografischen Protokolls für das angeforderte Datenobjekt von dem elektronischen Gerät, wobei das kryptographische Protokoll zur Authentisierung der Datenstation dient, und wobei die Durchführung des kryptographischen Protokolls Bedingung für den Zugriff der Datenstation auf das Datenobjekt ist,
• Programmanweisungen (124) zur Durchführung des kryptografischen Protokolls, und
wobei der Empfänger (128') zum Empfang des Datenobjekts dient.

30. Datenstation (100) nach Anspruch 29, die eine Schnittstelle (142') zur kontaktlosen Kommunikation mit dem elektronischen Gerät (102) aufweist.

31. Datenstation (100) nach Anspruch 30, wobei der Empfänger (128) weiterhin zum Empfang einer Bestimmung eines Verschlüsselungsprotokolls (109) ausgebildet ist, und die Datenstation Mittel zur gemäß dem Verschlüsselungsprotokoll verschlüsselten Kommunikation mit dem elektronischen Gerät (102) aufweist.

32. Datenstation (100) nach einem der Ansprüche 29 bis 31, wobei das elektronische Gerät (102) maschinenlesbare gedruckte Daten (116) aufweist, wobei der Empfänger (128) die Bestimmung eines kryptografischen Protokolls (108) gehobener Sicherheitsstufe empfängt, das die folgenden Schritte umfasst:
• Stellen (200) einer Anforderung an die Datenstation (100) basierend auf einem symmetrischen kryptografischen Algorithmus, wobei ein gerätspezifischer Schlüssel (144) verwendet wird, der aus den maschinenlesbaren gedruckten Daten ableitbar ist, durch das elektronische Gerät,
• Ableitung (202) des ersten kryptografischen Schlüssels aus den maschinenlesbaren gedruckten Daten durch die Datenstation,
• Beantworten (204) der Anforderung, um sich gegenüber dem elektronischen Gerät zu authentisieren, durch die Datenstation.

33. Datenstation (100) nach Anspruch 32, wobei zur Ableitung des gerätspezifischen Schlüssels (144) aus den maschinenlesbaren gedruckten Daten (116) ein zweiter kryptografischer Schlüssel notwendig ist, der elektronischem Gerät (102) und Datenstation bekannt ist.

34. Datenstation (100) nach Anspruch 32 oder 33, wobei das kryptografische Protokoll (108) gehobener Sicherheitsstufe weiterhin die folgenden Schritte umfasst:
• Stellen (206) einer Anforderung an das elektronische Gerät (102) basierend auf einem symmetrischen kryptografischen Algorithmus, wobei der gerätspezifische Schlüssel verwendet wird, durch die Datenstation,
• Beantworten (208) der Anforderung, um sich gegenüber der Datenstation zu authentisieren, durch das elektronische Gerät.

35. Datenstation (100) nach einem der Ansprüche 29 bis 34, wobei die Datenstation einen öffentlichen Schlüssel (118) und einen privaten Schlüssel (120) aufweist, wobei der Empfänger (128) die Bestimmung eines kryptografisches Protokolls (108) höherer Sicherheitsstufe empfangen kann, das die folgenden Schritte umfasst:
• Übermitteln des öffentlichen Schlüssels an das elektronische Gerät (102) durch die Datenstation,
• Stellen einer Anforderung an die Datenstation durch das elektronische Gerät unter Verwendung des öffentlichen Schlüssels, zu deren Beantwortung der private Schlüssel notwendig ist, durch das elektronische Gerät,
• Beantworten der Anforderung zur Authentisierung gegenüber dem elektronischen Gerät durch die Datenstation.

36. Datenstation (100) nach Anspruch 35, wobei der öffentlichen Schlüssel (118) durch eine digitale Signatur (122) **gekennzeichnet** ist, und das elektronische Gerät (102) die digitale Signatur verifiziert.

37. Ausweisdokument mit einem integrierten elektronischen Gerät nach einem der Ansprüche 15 bis 28.

## Claims

1. Method for a data terminal (100) to access one of a number of data objects (104), stored in an electronic device (102) whereby the electronic device features an allocation table (106), in which cryptographic protocols (108) of different security levels are assigned to the different data objects, whereby each of the cryptographic protocols is used to authenticate data terminal (100), and whereby the implementation of the cryptographic protocol assigned to one of the data objects in the allocation table is a condition for access by the data terminal to this data object, with the following steps:
• Transmission (216) of a request by data terminal (100) to the electronic device for the one particular data object,
• Determination (218) of a cryptographic protocol for the one particular data object with the help of the allocation table, by the electronic device
• Performing (222) of the cryptographic protocol by the electronic device and data terminal (100), und
• Transmission (220) of the one data object by the electronic device,
whereby electronic device (102) is integrated into an identifying document (114).

2. Method of claim 1 whereby the identifying document features machine-readable printed data (116), whereby in allocation table (106) a cryptographic protocol (108) of an elevated security level is assigned to at least a first one of a number of data objects (104), whereby the cryptographic protocol of elevated security level comprises the following steps:
• Placement (200) of a request to data terminal (100) based on a symmetrical cryptographic algorithm, whereby a device-specific key (144) is used, which can be derived from the machine-readable printed data, by the electronic device,
• Derivation (202) of the device-specific key from the machine-readable printed data by the data terminal,
• Responding (204) to the request, in order to authenticate itself to the electronic device, by the data terminal,
and whereby data terminal (100) features a public key (118) and a private key (120), whereby in allocation table (106) a cryptographic protocol (108) of a higher security level is assigned to at least a second of a number of data objects, whereby the cryptographic protocol of a higher security level comprises the following steps:
• Transmission (210) of the public key to the electronic device by the data terminal,
• Placement (212) of a request to the data terminal by the electronic device using the public key, for which the private key is required to answer, by the electronic device
• Responding (214) to the request for authentication with respect to the electronic device by the data terminal,
whereby at least the first and second data objects comprise personal biometric data, whereby in the allocation table at least one of a number of data objects (104) is assigned free access without a cryptographic protocol (108),
whereby the cryptographic protocol of elevated security level is executed by the electronic device (102) and the data terminal (100) when the one data object is the first data object and whereby the cryptographic protocol of higher security level is executed by the electronic device (102) and the data terminal (100) when the one data object is the second data object,

3. Method of Claim 1 or 2, whereby electronic device (102) features a software application (110), whereby the software application contains the allocation table (106), whereby cryptographic protocol (108) is specified by the software application, whereby the cryptographic protocol is implemented by the data terminal and the software application and the one data object is transmitted by the software application.

4. Method of Claim 3, whereby electronic device (102) features an operating system (112), which prevents any unauthorized alteration or removal of software application 110) and only allows access to data objects (104) via the software application.

5. Method of Claim 4, whereby operating system (112), following authentication as administrator of electronic device (102), allows alteration or removal of the software application.

6. Method of one of the preceding claims, whereby data terminal (100) and electronic device (102) communicate contactless.

7. Method of Claim 6, whereby in allocation table (106) an encryption protocol (109) of a different security level is furthermore assigned to different data objects (104), according to which the data terminal and the electronic device communicate in an encrypted manner.

8. Method of one of the preceding clams, whereby a general key (146), which is known to electronic device (102) and data terminal (100) is required to derive device-specific key (144) from machine-readable printed data (116).

9. Method of one of the preceding claims, whereby the cryptographic protocol of elevated security level (108) furthermore comprises the following steps:
• Placement (206) of a request by data terminal (100) to electronic device (102) based on a symmetrical cryptographic algorithm, whereby the device-specific key is used,
• Responding (208) to the request by the electronic device, to authenticate itself to the data terminal.

10. Method of one of the preceding claims, whereby public key (118) is **characterized by** a digital signature (122), and the electronic device verifies (300) the digital signature.

11. Computer program product with an allocation table (106), in which different data objects (104) are each assigned a cryptographic protocol (108) of a different security level, whereby each of the cryptographic protocols are used to authenticate a data terminal, and whereby the implementation of the cryptographic protocol assigned to the one data object in the allocation table is a condition for access of the data terminal to this data object, and computer-executable instructions for
• Receiving a request for one of a number of data objects (104) from a data terminal (100),
• Determining a cryptographic protocol for the one particular data object with the aid of the allocation table,
• Executing the cryptographic protocol with the data terminal,
• Sending the one particular data object to the data terminal.

12. Computer program product of Claim 11, whereby allocation table (106) and computer-executable instructions (124) can be installed in an electronic device with an operating system in such a way that the operating system prevents any unauthorized alteration or removal of the allocation table or the computer-executable instructions.

13. Computer program product of Claim 12, wherein access to data objects (104) is only possible via the computer-executable instructions.

14. Digital storage medium including a computer program product according to one of Claims 11, 12 or 13.

15. Electronic device (102) with
• A memory (126) for a number of data objects (104),
• A receiver (128) for receiving a request for one of the data objects from a data terminal (100),
• An allocation table (106), in which one cryptographic protocol (108) of a different security level is assigned to different data objects, whereby each of the cryptographic protocols is used to authenticate the data terminal, and whereby the implementation of the cryptographic protocol assigned to one of the data objects in the allocation table is a condition for access of the data terminal to this data object.
• Program instructions (124) for specifying a cryptographic protocol for the one data object with the aid of the allocation table,
• Program instructions (124) for implementing the cryptographic protocol with the data terminal,
• A transmitter (130) for sending the one data object to the data terminal.

16. Electronic device (102) of Claim 15, which features a software application (110), which includes program instructions (124), whereby the software application includes allocation table (106), whereby cryptographic protocol (108) is selected by the software application, whereby the cryptographic protocol is implemented by data terminal (100) and the software application, and the one particular data object (104) is transmitted via the software application.

17. Electronic device (102) of Claim 16, which features an operating system (112), whereby the operating system is designed to prevent any unauthorized alteration or removal of software application (110) and to prevent access to data objects (104) by circumventing the software application.

18. Electronic device (102) of Claim 17, whereby operating system (112) features an administrator function (140) for authenticating as administrator, whereby after authentication as administrator of the electronic device, alteration or removal of software application (110) is possible.

19. Electronic device (102) according to one of Claims 15 to 18, whereby the electronic device is integrated into an identifying document (114).

20. Electronic device (102) according to one of Claims 15 to 19, whereby at least one of data objects (104) includes personal biometric data.

21. Electronic device (102) according to one of Claims 15 to 20, which features an interface (142) for contactless communication with data terminal (100).

22. Electronic device (102) of Claim 21, whereby in allocation table (106) an encryption protocol (109) of a different security level is also assigned to different data objects, according to which data terminal (100) and the electronic device communicate in encrypted manner.

23. Electronic device (102) according to one of Claims 15 to 22, whereby in allocation table (106) at least one of a number of data objects (104) is assigned free access without cryptographic protocol (108).

24. Electronic device (102) of Claim 23, whereby the electronic device features machine-readable printed data (116), whereby in allocation table (106) a cryptographic protocol (108) of elevated security level is assigned to at least one of a number of data objects, which includes the following steps:
• Placement (200) of a request to data terminal (100) based on a symmetrical cryptographic algorithm, whereby a device-specific key (144) is used, which can be derived from the machine-readable printed data, by the electronic device,
• Derivation (202) of the device-specific key from the machine-readable printed data by the data terminal,
• Responding (204) to the request, in order to authenticate itself to the electronic device, by the data terminal.

25. Electronic device (102) of Claim 24, whereby a general key (146) which is known to the electronic device and data terminal (100) is required to derive the device-specific key from machine-readable printed data (116).

26. Electronic device (102) of Claim 24 or 25, whereby cryptographic protocol (108) of elevated security level also comprises the following steps:
• Placement (206) of a request by data terminal (100) to the electronic device based on a symmetrical cryptographic algorithm, whereby device-specific key (144) is used,
• Responding (208) to the request by the electronic device in order to authenticate itself to data terminal (100).

27. Electronic device (102) according to one of Claims 23 to 26, whereby data terminal (100) features a public key (118) and a private key (118), whereby in allocation table (106) at least one of a number of data objects (104) is assigned a cryptographic protocol (108) of higher security level, which comprises the following steps:
• Transmission (210) of the public key to the electronic device by the data terminal,
• Placement (212) of a request to the data terminal by the electronic device using the public key, for which the private key is required to answer, by the electronic device,
• Responding (214) to the request for authentication with respect to the electronic device by the data terminal.

28. Electronic device (102) of Claim 27, whereby public key (118) is **characterized by** a digital signature (122), and electronic device (102) verifies the digital signature.

29. Data terminal (100) for reading a data object (104) from a memory (126) of an electronic device (102) integrated into an identifying document (114) with
• A transmitter (130') for transmitting a request for a data object (104) to an electronic device, in which a number of data objects (104) are stored,
• A receiver (128') for receiving a specification of a cryptographic protocol for the requested data object from the electronic device, whereby the cryptographic protocol is used to authenticate the data terminal, and whereby the implementation of the cryptographic protocol is a condition for the data terminal to access the data object,
• Program instructions (124) for implementing the cryptographic protocol, and
whereby receiver (128') is used to receive the data object.

30. Data terminal (100) of Claim 29, which features an interface (142') for contactless communication with electronic device (102).

31. Data terminal (100) of Claim 30, whereby receiver (128) is furthermore designed to receive a specification of an encryption protocol (109), and the data terminal features a means for communication with electronic device (102) encrypted according to the encryption protocol.

32. Data terminal (100) according to one of Claims 29 to 31, whereby electronic device (102) features machine-readable printed data (116), whereby receiver (128) receives the specification of a cryptographic protocol (108) of elevated security level, which comprises the following steps:
• Placement (200) of a request to data terminal (100) based on a symmetrical cryptographic algorithm, whereby a device-specific key (144) is used, which can be derived from the machine-readable printed data, by the electronic device,
• Derivation (202) of the first cryptographic key from the machine-readable printed data by the data terminal,
• Responding (204) to the request by the data terminal in order to authenticate itself to electronic device.

33. Data terminal (100) of Claim 32, whereby a second cryptographic key, which is known to electronic device (102) and the data terminal, is required to derive device-specific key (144) from machine-readable printed data (116)

34. Data terminal (100) of Claim 32 or 33, whereby cryptographic protocol (108) of elevated security level also comprises the following steps:
• Placement (206) of a request to electronic device (102) by the data terminal based on a symmetrical cryptographic algorithm, whereby the device-specific key is used, by the data terminal,
• Responding (208) to the request by the electronic device in order to authenticate itself to the data terminal.

35. Data terminal (100) according to one of the Claims 29 to 34, whereby the data terminal features a public key (118) and a private key (120), whereby receiver (128) can receive the specification of a cryptographic protocol (108) of higher security level, which comprises the following steps:
• Transmission of the public key to electronic device (102) by the data terminal,
• Placement of a request to the data terminal by the electronic device using the public key, for which the private key is needed to reply, by the electronic device,
• Responding to the request for authentication with respect to the electronic device by the data terminal.

36. Data terminal (100) of Claim 35, whereby public key (118) is **characterized by** a digital signature (122), and electronic device (102) verifies the digital signature.

37. Identifying document with an integrated electronic device according to one of Claims 15 to 28.

## Revendications

1. Procédé pour l'accès à partir d'une station de données (100) à l'un d'une pluralité d'objets de données (104) mémorisés dans un appareil électronique (102), l'appareil électronique comportant une table d'affectation (106), dans laquelle des protocoles cryptographiques (108) de différents niveaux de sécurité sont associés à différents objets de données, chacun des protocoles cryptographiques servant à l'authentification de la station de données (100), et la réalisation du protocole cryptographique associé à l'un des objets de données dans la table d'affectation étant la condition d'accès de la station de données à cet objet de données, comprenant les étapes suivantes :
- transmission (216) d'une demande à l'appareil électronique pour l'un des objets de données par la station de données (100),
- définition (218) d'un protocole cryptographique pour l'un des objets de données à l'aide de la table d'affectation par l'appareil électronique,
- réalisation (222) du protocole cryptographique par l'appareil électronique et la station de données (100), et
- transmission (220) de l'un des objets de données par l'appareil électronique,
l'appareil électronique (102) étant intégré dans un document d'identité (114).

2. Procédé suivant la revendication 1, dans lequel le document d'identité comporte des données imprimées (116) lisibles par machine, dans lequel un protocole cryptographique (108) de niveau de sécurité élevé est associé dans la table d'affectation (106) à au moins un premier objet de la pluralité des objets de données (104), dans lequel le protocole cryptographique de niveau de sécurité élevé comprend les étapes suivantes :
- émission (200) d'une demande à la station de données (100) sur la base d'un algorithme cryptographique symétrique, une clé (114) spécifique à l'appareil qui est déductible des données imprimées lisibles par machine étant utilisée par l'appareil électronique,
- déduction (202) de la clé spécifique à l'appareil des données imprimées lisibles par machine par la station de données,
- réponse (204) à la demande pour s'authentifier par rapport à l'appareil électronique par la station de données, et dans lequel la station de données (100) comporte une clé publique (118) et une clé privée (120), un protocole cryptographique (108) de niveau de sécurité plus élevé étant associé dans la table d'affectation (106) à au moins un deuxième objet de la pluralité d'objets de données, dans, lequel le protocole cryptographique de niveau de sécurité plus élevé comprend les étapes suivantes :
- transmission (210) de la clé publique à l'appareil électronique (102) par la station de données,
- émission (212) d'une demande à la station de données par l'appareil électronique en utilisant la clé publique dont la réponse requiert la clé privée par l'appareil électronique,
- réponse (214) à la demande pour l'authentification par rapport à l'appareil électronique par la station de données,
dans lequel au moins les premiers et deuxièmes objets de données comportent des données biométriques personnelles, un accès libre sans protocole cryptographique (108) étant associé dans la table d'affectation à au moins l'un des objets de la pluralité d'objets de données (104),
dans lequel le protocole cryptographique de niveau de sécurité élevé est réalisé (222) par l'appareil électronique (102) et par la station de données (100) lorsque l'un des premiers objets de données est le premier objet de données, et dans lequel le protocole cryptographique de niveau de sécurité plus élevé est réalisé par l'appareil électronique et par la station de données lorsque l'un des objets de données est le deuxième objet de données.

3. Procédé suivant l'une des revendications 1 et 2, dans lequel l'appareil électronique (102) comporte une application logicielle (110), dans lequel l'application logicielle renferme la table d'affectation (106), dans lequel le protocole cryptographique (108) est défini par l'application logicielle, dans lequel le protocole cryptographique est réalisé par la station de données et par l'application logicielle, et l'un des objets de données est transmis par l'application logicielle.

4. Procédé suivant la revendication 3, dans lequel l'appareil électronique (102) comporte un système d'exploitation (112) qui empêche (110) une modification non autorisée ou une élimination de l'application logicielle et n'autorise l'accès aux objets de données (104) que par l'application logicielle.

5. Procédé suivant la revendication 4, dans lequel le système d'exploitation (112) autorise une modification ou une élimination de l'application logicielle après une authentification en tant qu'administrateur de l'appareil électronique (102).

6. Procédé suivant l'une des revendications précédentes, dans lequel la station de données (100) et l'appareil électronique (102) communiquent sans contact.

7. Procédé suivant la revendication 6, dans lequel un protocole de chiffrement (109) de niveau de sécurité différent est en outre associé dans la table d'affectation (106) à différents objets de données (104), selon lequel la station de données et l'appareil électronique communiquent de manière chiffrée.

8. Procédé suivant l'une des revendications précédentes, dans lequel une clé générale (146) connue par l'appareil électronique (102) et par la station de données (100) est requise pour la déduction de la clé spécifique (144) de l'appareil à partir des données imprimées (116) lisibles par machine.

9. Procédé suivant l'une des revendications précédentes, dans lequel le protocole cryptographique de niveau de sécurité élevé (108) comprend en outre les étapes suivantes:
- émission (206) d'une demande à l'appareil électronique (102) sur la base d'un algorithme cryptographique symétrique en utilisant la clé spécifique de l'appareil par la station de données (100),
- réponse (208) à la demande pour s'authentifier par rapport à la station de données par l'appareil électronique.

10. Procédé suivant l'une des revendications précédentes, dans lequel la clé publique (118) est **caractérisée par** une signature numérique (122), et l'appareil électronique vérifie (300) la signature numérique.

11. Produit de programme informatique comprenant une table d'affectation (106), dans laquelle un protocole cryptographique (108) de niveau de sécurité différent est respectivement associé à différents objets de données (104), chacun des protocoles cryptographiques servant à l'authentification d'une station de données, et la réalisation du protocole cryptographique associé à l'un des objets de données dans la table d'affectation étant la condition pour l'accès de la station de données à cet objet de données, et des instructions (124) exécutables par ordinateur pour
- la réception d'une demande pour l'un des objets d'une pluralité d'objets de données (104) par une station de données (100),
- la définition d'un protocole cryptographique pour l'un des objets de données à l'aide de la table d'affectation,
- la réalisation du protocole cryptographique par la station de données,
- l'émission de l'un des objets de données à la station de données.

12. Produit de programme informatique suivant la revendication 11, dans lequel la table d'affectation (106) et les instructions (124) exécutables par ordinateur sont installées dans un appareil électronique avec un système d'exploitation de sorte que le système d'exploitation empêche une modification non autorisée ou une élimination de la table d'affectation ou des instructions exécutables par ordinateur.

13. Produit de programme informatique suivant la revendication 12, dans lequel l'accès aux objets de données (104) n'est possible que par les instructions exécutables par ordinateur.

14. Support d'information numérique renfermant un produit de programme informatique suivant l'une des revendications 11, 12 et 13.

15. Appareil électronique (102) comprenant
- une mémoire (126) pour une pluralité d'objets de données (104),
- un récepteur (128) pour la réception d'une demande pour l'un des objets de données par une station de données (100),
- une table d'affectation (106), dans laquelle un protocole cryptographique (108) de niveau de sécurité différent est respectivement associé à différents objets de données, chacun des protocoles cryptographiques servant à l'authentification de la station de données, et la réalisation du protocole cryptographique associé à l'un des objets dans la table d'affectation étant la condition pour l'accès de la station de données à cet objet de données,
- des instructions de programme (124) pour définir un protocole cryptographique pour l'un des objets de données à l'aide de la table d'affectation,
- des instructions de programme (124) pour la réalisation du protocole cryptographique par la station de données,
- un émetteur (130) pour émettre l'un des objets de données à la station de données.

16. Appareil électronique (102) suivant la revendication 15, qui comporte une application logicielle (110) renfermant les instructions de programme (124), dans lequel l'application logicielle renferme la table d'affectation (106), dans lequel le protocole cryptographique (108) est sélectionné par l'application logicielle, dans lequel le protocole cryptographique est réalisé par la station de données (100) et par l'application logicielle, et l'un des objets de données (104) est transmis par l'application logicielle.

17. Appareil électronique (102) suivant la revendication 16, qui comporte un système d'exploitation (112), dans lequel le système d'exploitation est configuré pour empêcher une modification non autorisée ou une élimination de l'application logicielle (110) et pour empêcher un accès aux objets de données (104) en contournant l'application logicielle.

18. Appareil électronique (102) suivant la revendication 17, dans lequel le système d'exploitation (112) présente une fonction d'administration (140) pour l'authentification en tant qu'administrateur, dans lequel une modification ou une élimination de l'application logicielle (110) est possible après une authentification en tant qu'administrateur de l'appareil électronique.

19. Appareil électronique (102) suivant l'une des revendications 15 à 18, l'appareil électronique étant intégré dans un document d'identité (114).

20. Appareil électronique (102) suivant l'une des revendications 15 à 19, dans lequel au moins l'un des objets de données (104) comporte des données biométriques personnelles.

21. Appareil électronique (102) suivant l'une des revendications 15 à 20, qui comporte une interface (142) pour la communication sans contact avec la station de données (100).

22. Appareil électronique (102) suivant la revendication 21, dans lequel un protocole de chiffrement (109) de niveau de sécurité différent est en outre associé dans la table d'affectation (106) à différents objets de données, selon lequel la station de données (100) et l'appareil électronique communiquent de manière chiffrée.

23. Appareil électronique (102) suivant l'une des revendications 15 à 22, dans lequel un accès libre sans protocoles cryptographique (108) est associé dans la table d'affectation (106) à au moins l' un des objets de la pluralité des objets de données (104).

24. Appareil électronique (102) suivant la revendication 23, dans lequel l'appareil électronique comporte des données imprimées (116) lisibles par machine, dans lequel un protocole cryptographique (108) de niveau de sécurité élevé est associé dans la table d'affectation (106) à au moins l'un des objets de la pluralité des objets de données, comprenant les étapes suivantes :
- émission (200) d'une demande à la station de données (100), sur la base d'un algorithme cryptographique symétrique, une clé (144) spécifique de l'appareil déductible à partir des données imprimées lisibles par machine étant alors utilisée par l'appareil électronique,
- déduction (202) de la clé spécifique de l'appareil à partir des données imprimées lisibles par machine par la station de données,
- réponse (204) à la demande pour s'authentifier par rapport à l'appareil électronique par la station de données.

25. Appareil électronique (102) suivant la revendication 24, dans lequel une clé générale (146) connue par l'appareil électronique et par la station de données (100) est requise pour la déduction de la clé spécifique de l'appareil à partir des données imprimées (116) lisibles par machine.

26. Appareil électronique (102) suivant l'une des revendications 24 et 25, dans lequel le protocole cryptographique (108) de niveau de sécurité élevé comprend en outre les étapes suivantes :
- émission (206) d'une demande à l'appareil électronique sur la base d'un algorithme cryptographique symétrique en utilisant la clé (144) spécifique de l'appareil par la station de données (100),
- réponse (208) à la demande pour s'authentifier par rapport à la station de données (100) par l'appareil électronique.

27. Appareil électronique (102) suivant l'une des revendications 23 à 26, dans lequel la station de données (100) comporte une clé publique (118) et une clé privée (120), dans lequel un protocole cryptographique (108) de niveau de sécurité plus élevé est associé dans la table d'affectation (106) à au moins l'un des objets de la pluralité des objets de données (104), comprenant les étapes suivantes :
- transmission (210) de la clé publique à l'appareil électronique par la station de données,
- émission (212) d'une demande à la station de données par l'appareil électronique en utilisant la clé publique dont la réponse requiert la clé privée par l'appareil électro nique,
- réponse (214) à la demande pour l'authentification par rapport à l'appareil électronique par la station de données.

28. Appareil électronique (102) suivant la revendication 27, dans lequel la clé publique (118) est **caractérisée par** une signature numérique (122), et l'appareil électronique (102) vérifie la signature numérique.

29. Station de données (100) pour la lecture d'un objet de données (104) à partir d'une mémoire (126) d' un appareil électronique (102) intégré dans un document d'identité (114), comprenant :
- un émetteur (130') pour la transmission d'une demande pour un objet de données (104) à un appareil électronique, dans lequel est mémorisée une pluralité d'objets de données (104),
- un récepteur (128') pour la réception d'une définition d'un protocole cryptographique pour l'objet de données demandé par l'appareil électronique, le protocole cryptographique servant à l'authentification de la station de données, et la réalisation du protocole cryptographique étant la condition d'accès de la station de données à l'objet de données,
- des instructions de programme (124) pour la réalisation du protocole cryptographique, et
dans lequel le récepteur (128') sert à la réception de l'objet de données.

30. Station de données (100) suivant la revendication (29), qui présente une interface (142') pour la communication sans contact avec l'appareil électronique (102).

31. Station de données (100) suivant la revendication 30, dans laquelle le récepteur (128) est réalisé en outre pour la réception d'une définition d'un protocole de chiffrement (109), et la station de données présente des moyens pour la communication chiffrée conformément au protocole de chiffrement, avec l'appareil électronique (102).

32. Station de données (100) suivant l'une des revendications 29 à 31, dans laquelle l'appareil électronique (102) comporte des données imprimées (116) lisibles par machine, dans lequel le récepteur (128) reçoit la définition d'un protocole cryptographique (108) de niveau de sécurité élevé, qui comprend les étapes suivantes :
- émission (200) d'une demande à la station de données (100), sur la base d'un algorithme cryptographique symétrique, une clé (144) spécifique de l'appareil déductible des données imprimées lisibles par machine étant alors utilisée par l'appareil électronique,
- déduction (202) de la première clé cryptographique à partir des données imprimées lisibles par machine par la station de données,
- réponse (204) à la demande pour s'authentifier par rapport à l'appareil électronique par la station de données.

33. Station de données (100) suivant la revendication 32, dans laquelle une seconde clé cryptographique connue par l'appareil électronique (102) et par la station de données est requise pour la déduction de la clé (144) spécifique de l'appareil à partir des données imprimées (116) lisibles par machine.

34. Station de données (100) suivant l'une des revendications 32 et 33, dans laquelle le protocole cryptographique (108) de niveau de sécurité élevé comprend en outre les étapes suivantes :
- émission (206) d'une demande à l'appareil électronique (102) sur la base d'un algorithme cryptographique symétrique en utilisant la clé spécifique de l'appareil par la station de données,
- réponse (208) à la demande pour s'authentifier par rapport à la station de données par l'appareil électronique.

35. Station de données (100) suivant l'une des revendications 29 à 34, dans laquelle la station de données comporte une clé publique (118) et une clé privée (120), dans laquelle le récepteur (128) peut recevoir la définition d'un protocole cryptographique (108) de niveau de sécurité plus élevé, qui comprend les étapes suivantes :
- transmission de la clé publique à l'appareil électronique (102) par la station de données,
- émission d'une demande à la station de données par l'appareil électronique en utilisant la clé publique dont la réponse requiert la clé privée par l'appareil électronique,
- réponse à la demande pour l'authentification par rapport à l'appareil électronique par la station de données.

36. Station de données (100) suivant la revendication 35, dans laquelle la clé publique (118) est **caractérisée par** une signature numérique (122), et l'appareil électronique (102) vérifie la signature numérique.

37. Passeport avec un appareil électronique intégré suivant l'une des revendications 15 à 28.
